# EUROPEAN PATENT APPLICATION

(11) **EP 4 679 133 A2**
(43) Date of publication of application: **14.01.2026**
(21) Application number: 25178015.1
(22) Date of filing: 21.05.2025
(51) Int. Cl.: G01S 7/481, G01S 7/4863, G01S 7/4865, G01S 7/486, G01S 17/10, G01S 17/42, G01S 17/894

(54) **ECHO SIGNAL RECEIVING METHOD AND DEVICE, TERMINAL DEVICE AND STORAGE MEDIUM**

(30) Priority: 24.05.2024 CN 202410657809
(71) Applicant: Suteng Innovation Technology Co., Ltd, Shenzhen City Guangdong 518000 (CN)
(72) Inventor: GONG, Changsheng, Shenzhen City (CN)
(74) Representative: Ran, Handong

(57) **Abstract**

The application provides an echo signal receiving method and device, a terminal device and a storage medium, and is applied to a LIDAR system. The LIDAR system comprises a photosensitive receiving array, and the photosensitive receiving array comprises a plurality of photosensitive subunits. The method comprises the following steps: collecting a level state signal of each photosensitive subunit; performing phase shift on the level state signal according to a phase shift time corresponding to each photosensitive subunit; wherein the phase shift times corresponding to at least two photosensitive subunits are not equal; and fusing the phase-shifted level state signal to obtain a target echo signal.

## Description

### TECHNICAL FIELD

The present application relates to the technical field of LiDAR, and in particular to an echo signal receiving method and device, a terminal device and a storage medium.

### TECHNICAL BACKGROUND

The LIDAR needs to measure not only near objects but also far objects. When measuring, the target object can be a high reflectivity object or a low reflectivity object. When detecting a near object or a high reflectivity object, the LIDAR often exhibits poor measurement precision due to echo saturation. When detecting a far object or a low reflectivity object, the measurement precision is also poor due to weak echo intensity. Therefore, when the LIDAR deals with target objects at different distances and with different reflectivities, the dynamic range of the obtained echo signal in the time domain is crucial to the measurement precision of the LIDAR. The dynamic range of the echo signal in the time domain can be embodied by a pulse width, a rising edge length, and a falling edge length.

Therefore, it is urgent to provide a signal receiving method capable of expanding the dynamic range of the echo signal in the time domain, so as to improve the measurement precision of the LIDAR.

### SUMMARY

Embodiments of the application provide an echo signal receiving method and device, terminal equipment and a storage medium, which can effectively expand the dynamic range of the echo signal in the time domain and improve the measurement precision of the LIDAR.

In a first aspect, the embodiment of the application provides an echo signal receiving method applied to a LIDAR system, wherein the LIDAR system comprises a photosensitive receiving array, the photosensitive receiving array comprises a plurality of photosensitive subunits, and the method comprises the following steps: acquiring a level state signal of each photosensitive subunit; performing phase shift on the level state signal according to a phase shift time corresponding to each photosensitive subunit, wherein the phase shift times corresponding to at least two photosensitive subunits are different; fusing the phase-shifted level state signal to obtain a target echo signal.

In an implementation form of the first aspect, the performing phase shift on the level state signal according to a phase shift time corresponding to each photosensitive subunit comprises: determining a delay time for a sampling moment of the photosensitive subunit according to the phase shift time; after the delay time has elapsed, triggering the photosensitive subunit to output the level state signal.

In an implementation form of the first aspect, the performing phase shift on the level state signal according to a phase shift time corresponding to each photosensitive subunit comprises: inputting the level state signal into a data shifter corresponding to the phase shift time to perform sampling moment shift.

In an implementation form of the first aspect, after the acquiring a level state signal of each photosensitive subunit, the method further comprises: interpolating the level state signal output by the photosensitive subunit.

In an implementation form of the first aspect, the photosensitive receiving array comprises at least two photosensitive subunits with different photon detection efficiencies.

In a second aspect, an echo signal receiving device includes: a photosensitive receiving array including a plurality of photosensitive subunits; an acquisition unit, connected with the photosensitive receiving array, configured to acquire a level state signal output by the photosensitive receiving array; a phase shifting unit, connected with the acquisition unit, configured to shift the phase of the level state signal according to a phase shifting time of each photosensitive subunit, wherein the phase shifting times corresponding to at least two photosensitive subunits are different; a fusion unit, connected with the phase shifting unit, configured to fuse the level state signal after phase shifting to obtain a target echo signal.

In an implementation form of the second aspect, the phase shifting unit includes a clock generator and a delay unit; the clock generator is configured to generate a sampling moment; the delay unit is configured to delay an acquisition moment for the acquisition unit.

In an implementation form of the second aspect, the delay unit includes a serial delay unit and/or a parallel delay unit.

In an implementation form of the second aspect, the phase shifting unit includes a data shifter; the data shifter is configured to shift the level state signal at the sampling moment.

In an implementation form of the second aspect, the echo signal receiving device further includes an interpolation unit configured to interpolate the level state signal output by the photosensitive subunit.

In an implementation form of the second aspect, the echo signal receiving device further includes a power supply unit including at least two power supply units with different power supply voltages and/or power supply currents, the power supply units configured to supply power to corresponding photosensitive subunits.

In a third aspect, an embodiment of the present application provides a terminal device, the terminal device including a processor, a memory, and a computer program stored in the memory and executable on the processor, wherein the processor executes the computer program to implement the method in the first aspect or any optional implementation of the first aspect.

In a fourth aspect, an embodiment of the present application provides a computer-readable storage medium, the computer-readable storage medium storing a computer program, wherein the computer program is executed by a processor to implement the method in the first aspect or any optional implementation of the first aspect.

In a fifth aspect, an embodiment of the present application provides a computer program product, when the computer program product is executed on a terminal device, the computer program product causes the terminal device to execute the method in the first aspect or any optional implementation of the first aspect.

Compared with the prior art, the embodiment of the present application has the following beneficial effects:

The echo signal receiving method and apparatus, the terminal device, and the computer-readable storage medium provided by the embodiment of the present application shift the phase of the level state signal output by the photosensitive subunit, and at least two phase shifting times are different, thereby improving the dynamic range of the sampling number, the target echo signal obtained by fusing the level state signal after phase shifting has a larger dynamic range in the time domain, and the measurement precision of the LIDAR can be improved.

### BRIEF DESCRIPTION OF DRAWINGS

In order to more clearly illustrate the embodiments of the present application or the technical solutions in the prior art, the drawings required for use in the embodiments or the description of the prior art will be briefly introduced below. Obviously, the drawings described below are only some embodiments of the present application. For ordinary technicians in this field, other drawings can be obtained based on these drawings without paying any creative work.
FIG.1 is a schematic diagram of a structure of a LiDAR system according to an embodiment of the present application;
Figure 2 is a schematic diagram of a photosensitive receiving array according to an embodiment of the present application;
FIG.3 is a schematic diagram of an echo signal receiving device according to an embodiment of the present application;
FIG.4 is a schematic diagram of an echo signal receiving device according to an embodiment of the present application;
FIG.5 is a schematic diagram of another phase shift manner of setting a delay unit on a sampling clock according to an embodiment of the present application;
FIG.6 is a schematic diagram of another phase shift manner of setting a delay unit on a sampling clock according to an embodiment of the present application;
FIG.7 is a schematic diagram of a shift manner of a data shifter according to an embodiment of the present application;
FIG.8 is a schematic diagram of a fusion process of sampling data without phase shift according to an embodiment of the present application;
FIG.9 is a schematic diagram of a fusion process of sampling data without phase shift according to an embodiment of the present application;
FIG.10 is a schematic diagram of an echo signal after fusion of sampling data without phase shift and a target echo signal after fusion of sampling data after phase shift according to an embodiment of the present application;
FIG. 11 is a schematic diagram of another echo data receiving device according to an embodiment of the present application;
FIG. 12 is a schematic diagram of a process of interpolating a level state signal output by a photosensitive subunit according to an embodiment of the present application;
FIG. 13 is a schematic diagram of another echo signal receiving device according to an embodiment of the present application;
FIG. 14 is a schematic diagram of a power supply unit according to an embodiment of the present application;
FIG. 15 is an echo diagram of a receiving module with constant PDE receiving an echo signal reflected by a high reflectivity object or an echo signal reflected by a close object according to an embodiment of the present application;
FIG. 16 is an echo diagram of an echo signal receiving device receiving an echo signal reflected by a high reflectivity object or an echo signal reflected by a close object according to an embodiment of the present application;
FIG. 17 is a schematic diagram of an implementation process of an echo signal receiving method according to an embodiment of the present application;
FIG. 18 is a schematic diagram of an implementation process of another echo signal receiving method according to an embodiment of the present application;
FIG. 19 is a schematic diagram of a terminal device according to an embodiment of the present application;
FIG. 20 is a schematic diagram of a chip according to an embodiment of the present application.

### DETAILED DESCRIPTION

In the following description, for purposes of explanation and not limitation, specific details are set forth, such as particular architectures, technologies, techniques, etc. in order to provide a thorough understanding of the present application. However, it will be apparent to those skilled in the art that the present application can be practiced in other embodiments that depart from these specific details. In other instances, detailed descriptions of well-known systems, devices, circuits, and methods are omitted so as not to obscure the description of the present application with unnecessary detail.

It should be understood that the term "and/or" used in the application description and the appended claims specifies any combination of one or more of the associated listed items and all possible combinations, and includes these combinations. In addition, in the description of the application and the appended claims, the terms "first", "second", "third", etc. are only used to distinguish the description, and cannot be understood as indicating or implying relative importance.

It should also be understood that, in the description of the application, reference to "one embodiment" or "some embodiments" etc. means that a particular feature, structure, or characteristic described in connection with the embodiment is included in at least one embodiment of the application. Thus, the appearances of the phrases "in one embodiment", "in some embodiments", "in other embodiments", "in additional embodiments" etc. in various places throughout the specification are not necessarily all referring to the same embodiment, unless otherwise specifically noted. The terms "comprising", "comprises", "including", "includes" and "having" and their conjugates mean "including but not limited to", unless otherwise expressly specified.

The LIDAR is a radar system for detecting the position and speed of a target by emitting a laser beam. In addition to detecting the distance of an object, the LIDAR can also detect the reflectivity of the object for target recognition. The specific working principle of the LIDAR is to emit a detection signal to a target. After the detection signal reaches the target, it is reflected by the target object to form echo data. The LIDAR receives the signal (echo data) reflected by the target, and then determines the information about the target, such as the distance, position, height, speed, attitude, shape, reflectivity, etc. of the target according to the echo data, thereby achieving target detection, target tracking and target recognition.

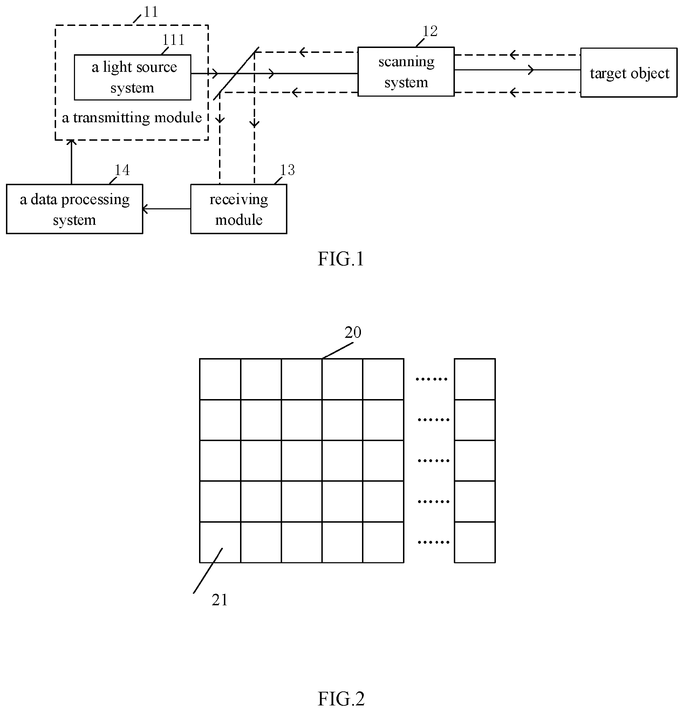

As shown in FIG. 1, the LIDAR 10 generally includes a transmitting module 11, a scanning system 12, a receiving module 13 and a data processing system 14. The transmitting module 11 can include a light source system 111.

The light source system 111 is used to generate a laser beam required by the LIDAR 10. Specifically, the light source system 111 can include a laser and optical devices such as a transmitting lens group. The scanning system 12 is used to deflect the laser beam generated by the light source system 111 at an angle, so that the laser beam can hit different positions at different moments. The scanning system 12 can be a mechanical scanning system (i.e. a rotating driving platform) or a semi-solid scanning system (i.e. a rotating mirror, a vibrating mirror or a combination of the two). The application does not limit the form of the scanning system. It can be understood that the LIDAR in the application can also be a solid-state LIDAR, that is, scanning is achieved by controlling light sources at different angles to emit light in sequence.

The laser beam emitted by the light source system is reflected by the target object after reaching the target object, and the reflected light pulse is received by a photosensitive receiving array in the receiving module 13, and the echo signal is processed based on the output signal of the photosensitive receiving array to generate corresponding detection information.

As shown in FIG. 2, the photosensitive receiving array 20 includes a plurality of photosensitive subunits 21. After the echo beam hits the photosensitive receiving array 20, the covered photosensitive subunits 21 can output corresponding electrical signals. The electrical signals output by the photosensitive subunits 21 can be collected by an acquisition unit, and a plurality of signals collected by the acquisition unit are synthesized to obtain echo data corresponding to the echo beam.

It should be noted that the photosensitive receiving array 20 can be rectangular as shown in FIG. 2, or circular or of other shapes.

It should be noted that the photosensitive receiving array 20 can be a Single Photon Avalanche Diode (SPAD) array or a Silicon photomultiplier (SiPM) array, and the application does not limit the specific form.

The LIDAR needs to measure not only a near-distance object but also a far-distance object. When measuring, the target object can be a high reflectivity object or a low reflectivity object. When the LIDAR detects the near-distance object or the high reflectivity object, the measurement precision of the LIDAR is often poor due to echo saturation. When the LIDAR detects the far-distance object or the low reflectivity object, the measurement precision is also poor due to weak echo intensity. Therefore, when the LIDAR deals with target objects of different distances and different reflectivities, the dynamic range of the obtained echo signal in the time domain is crucial to the measurement precision of the LIDAR. The dynamic range of the echo signal in the time domain can be embodied by a pulse width, a rising edge length, and a falling edge length.

Based on this, the embodiment of the application provides an echo signal receiving method, which phase shifts the level state signal output by the photosensitive subunit, and at least two unequal phase shift times exist, so that the dynamic range of the sampling number is improved, the target echo signal obtained by fusing the phase-shifted level state signal can have a larger dynamic range in the time domain, and the measurement precision of the LIDAR can be improved.

The echo signal receiving method and the echo signal receiving device provided by the embodiment of the application are described in detail below.

Before the echo signal receiving method provided by the embodiment of the application is introduced, an echo signal receiving device provided by the embodiment of the application is described.

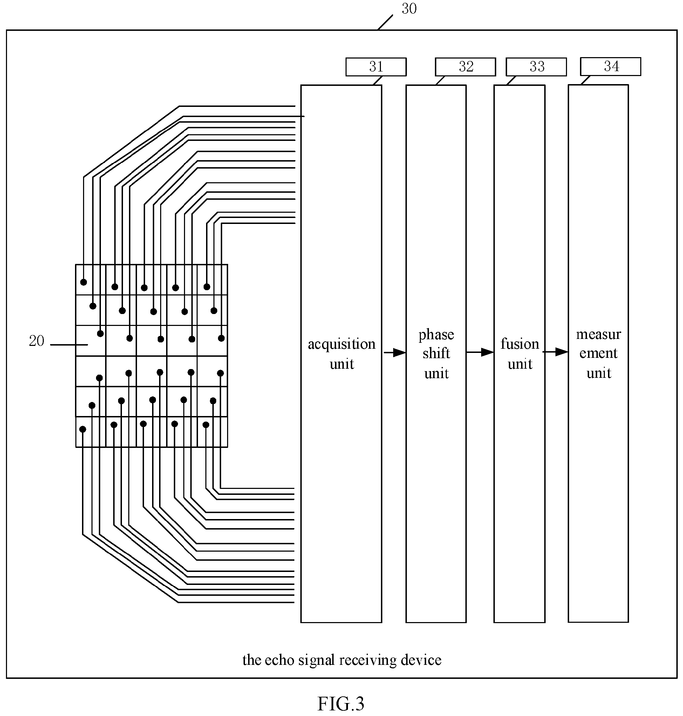

Referring to FIG. 3, FIG. 3 shows a structural schematic diagram of an echo signal receiving device provided by the embodiment of the application. As shown in FIG. 3, the echo signal receiving device 30 can include a photosensitive receiving array 20, an acquisition unit 31, a phase shift unit 32, a fusion unit 33, and a measurement unit 34. The acquisition unit 31 is connected with the photosensitive receiving array 20 and the phase shift unit 32 respectively, the fusion unit 33 is connected with the phase shift unit 32, and the measurement unit 34 is connected with the fusion unit 33.

The photosensitive receiving array 20 is used to receive an echo light beam.

In a specific application, the photosensitive receiving array 20 includes a plurality of photosensitive subunits 21. After the echo light beam hits the photosensitive receiving array 20, the covered photosensitive subunits 21 can output corresponding electrical signals, thereby forming the level state signal output by the photosensitive array 20.

The acquisition unit 31 is used to acquire the level state signal output by the photosensitive receiving array 20.

In a specific application, the acquisition of the electrical signal output by each photosensitive subunit 21 by the acquisition unit 31 is synchronous acquisition, that is, the output electrical signal of the photosensitive subunit 21 is acquired at the same time, or when the phase shift unit 32 sets a delay unit on a sampling clock to achieve time delay to realize phase shift, the acquisition time of the electrical signal output by each photosensitive subunit 21 can be all different or partially different.

The phase shifting unit 32 is configured to shift the phase of the level state signal according to the phase shifting time corresponding to each photosensitive subunits 21.

**In** a specific application, the phase shifting unit 32 partially or totally shifts the phase of the result output by the acquisition unit 31. The phase shifting manner can be time delay of the collected level state signal by using a data shifter, or time delay by setting a delay unit on a sampling clock, so as to realize phase shifting.

**In** a possible implementation, the echo signal receiving device can be a receiving chip.

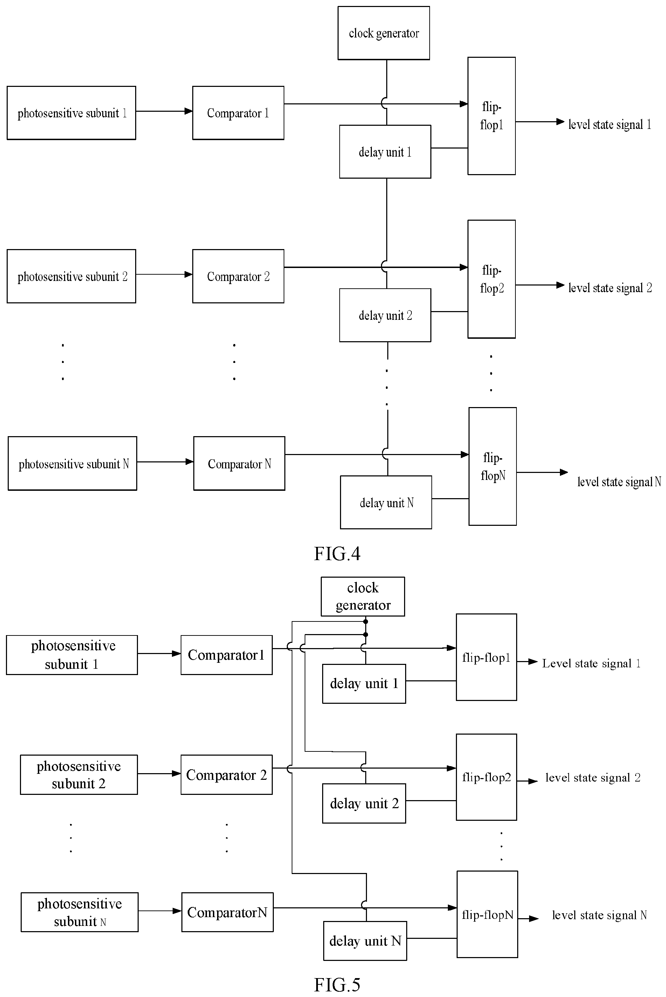

**In** a possible implementation, referring to FIG. 4, FIG. 4 shows an architectural schematic diagram of a phase shifting manner of setting a delay unit on a sampling clock. As shown in FIG. 4, a serial delay unit structure can be used to realize clock delay on the sampling clock. For the electrical signal output by the photosensitive subunit 1, the level state signal output by the trigger 1 after the comparator 1 is compared can be obtained after the delay time t1 corresponding to the delay unit 1; for the electrical signal output by the photosensitive subunit 2, the level state signal 2 output by the trigger 2 after the comparator 2 is compared can be obtained after the delay time t1 corresponding to the delay unit 1 and the delay time t2 corresponding to the delay unit 2 are accumulated (i.e. t1+t2); and for the electrical signal output by the photosensitive subunit N, the level state signal N output by the trigger N after the comparator N is compared can be obtained after the delay time t1 corresponding to the delay unit 1, the delay time t2 corresponding to the delay unit 2,..., and the delay time tN corresponding to the delay unit N are accumulated (i.e. t1+t2+...+tN).

It should be noted that the clock unit generator in FIG. 4 is used to generate a sampling moment, and after the sampling moment passes through the delay unit, the flip-flop triggers the echo signal sampling of the photosensitive subunit, that is, the level state signal of the corresponding photosensitive subunit is collected.

In another possible implementation, referring to FIG. 5, FIG. 5 shows a schematic diagram of another phase shift manner of setting the delay unit on the sampling clock. As shown in FIG. 5, the clock delay on the sampling clock can also be implemented by using a parallel delay unit structure. For the electrical signal output by the photosensitive subunit 1, the electrical signal passes through the delay time t1 corresponding to the delay unit 1, and then the level state signal 1 is obtained by the comparator 1 after being output by the flip-flop 1; for the electrical signal output by the photosensitive subunit 2, the electrical signal passes through the delay time t2 corresponding to the delay unit 2, and then the level state signal 2 is obtained by the comparator 2 after being output by the flip-flop 2; for the electrical signal output by the photosensitive subunit N, the electrical signal passes through the delay time tN corresponding to the delay unit N, and then the level state signal N is obtained by the comparator N after being output by the flip-flop N.

It should be understood that at least two delay times in t1, t2, ..., tN are different, and optionally, in a possible implementation, each delay time in t1, t2, ..., tN is different.

It should be noted that the phase shift manner of setting the delay unit on the sampling clock can also be implemented by using a combination of series and parallel, and the phase shift can not be performed on some photosensitive subunits, and the phase shift times of some photosensitive subunits can be the same.

It should be noted that in another implementation of the present application, some or all of the photosensitive subunits 1, 2, ..., n can correspond to one or more delay units, and when a photosensitive unit corresponds to multiple delay units, the sampling number of the echo signal of the photosensitive unit can be increased, so that the measurement accuracy of the LIDAR can be further improved. It should be understood that the phase shift manner of the multiple delay units can be implemented by using a combination of series and/or parallel configurations.

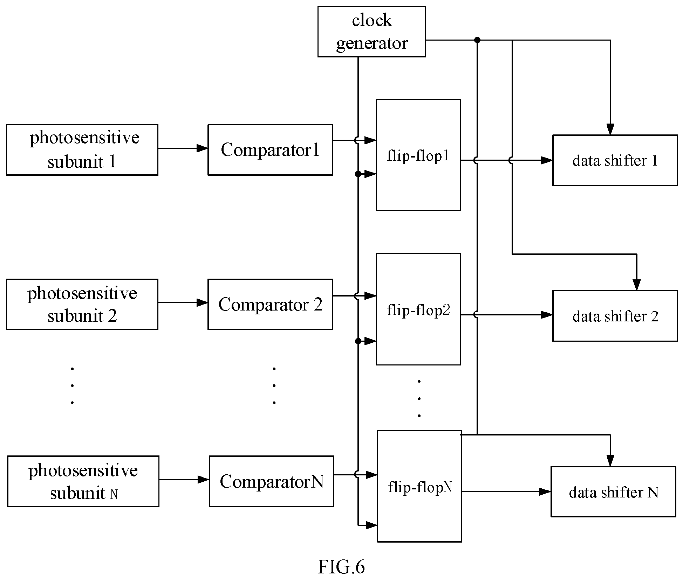

In another implementation of the present application, the phase shift unit 32 can also shift the phase of the level state signal output by the acquisition unit 31 at the same sampling moment by using a data shifter corresponding to each photosensitive subunit 21. For example, refer to FIG. 6, which shows a schematic diagram of the architecture of the phase shift method using the data shifter. As shown in FIG. 6, the photosensitive subunit 1 triggers the flip-flop 1 to output the corresponding level state signal at the sampling moment generated by the clock generator, and then the level state signal is shifted in sampling moment by the data shifter 1 according to the phase shift time corresponding to the photosensitive subunit 1. The photosensitive subunit 2 triggers the flip-flop 2 to output the corresponding level state signal at the sampling moment generated by the clock generator, and then the level state signal is shifted in sampling moment by the data shifter 2 according to the phase shift time corresponding to the photosensitive subunit 2. In this way, the photosensitive subunit N triggers the flip-flop N to output the corresponding level state signal at the sampling moment generated by the clock generator, and then the level state signal is shifted in sampling moment by the data shifter N according to the phase shift time corresponding to the photosensitive subunit N, thereby shifting the phase of the level state signal.

It should be noted that for the photosensitive subunit which does not need to be phase shifted, the data shifter can not be connected to the photosensitive subunit, or the phase shift time of the data shifter connected to the photosensitive subunit can be set to 0.

It should be further noted that the data shifter is a device capable of adjusting the sampling moment corresponding to the current sampling data (i.e., the level state signal).

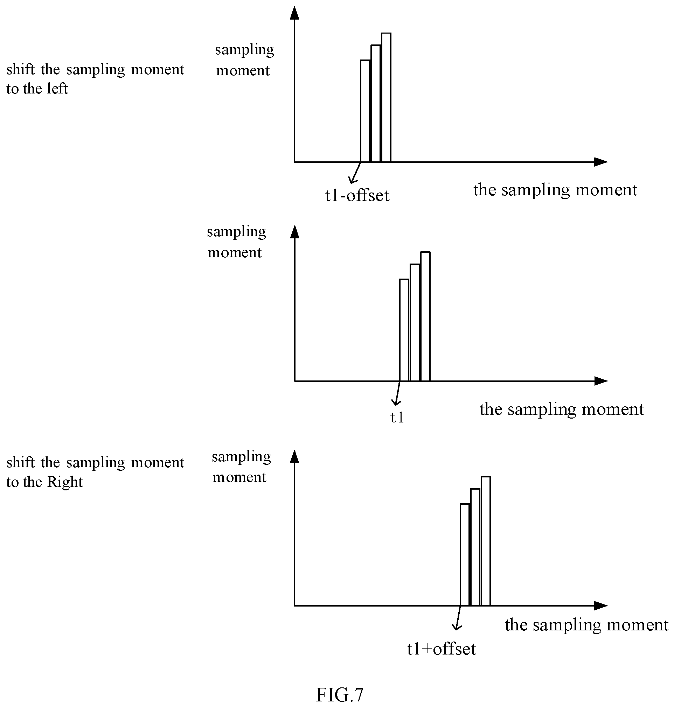

For example, as shown in FIG. 7, the sampling moment of the level state of the photosensitive subunit 1 is t1, and the data shifter can shift the sampling moment to the left or to the right, i.e., advance or delay, for example, adjusting the sampling moment to t1-offset is left shifting data, i.e., advancing the sampling moment by offset; and adjusting the sampling moment to t1+offset is right shifting data, i.e., delaying the sampling moment by offset.

The fusion unit 33 can fuse the phase-shifted level state signals to obtain the target echo signal.

In a specific application, when performing data fusion, the fusion unit 33 can superimpose the level state signals output by the photosensitive subunits 21 at the same moment to obtain the fused target echo signal.

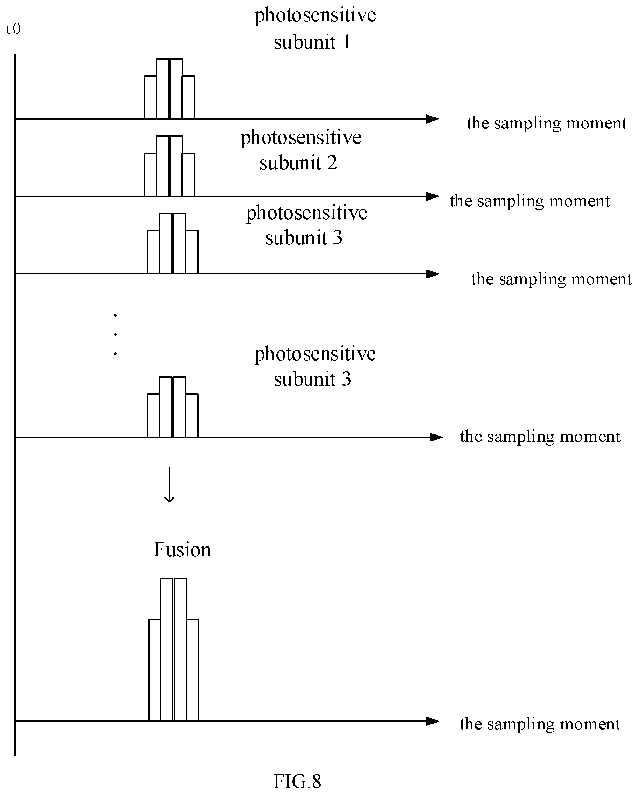

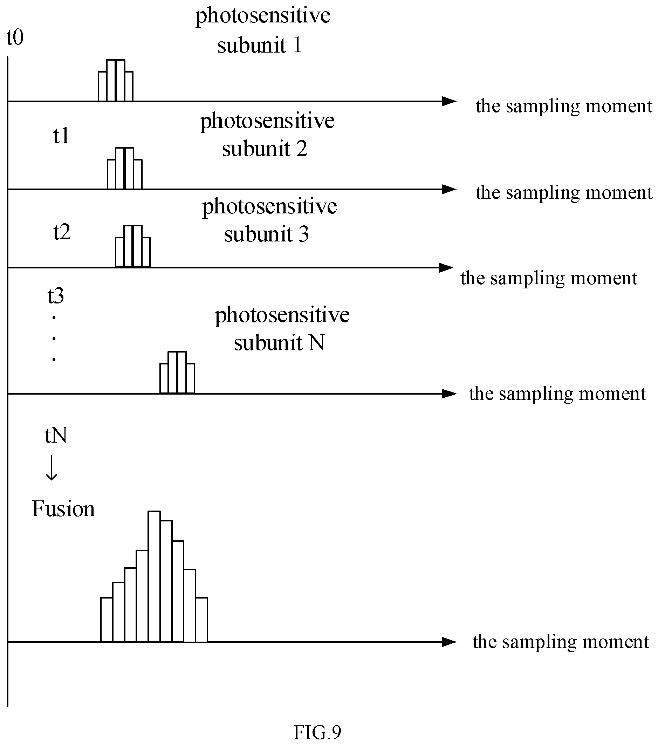

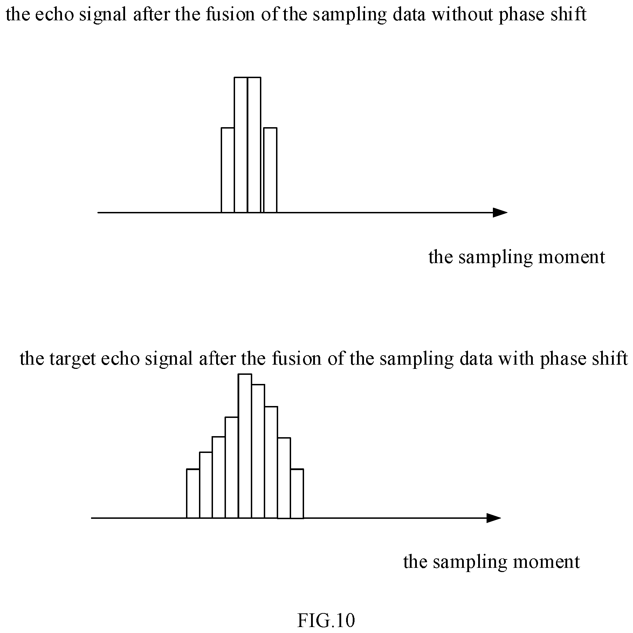

Please refer to FIG. 8 to FIG. 10, wherein FIG. 8 is a schematic diagram of the fusion process of the sampling data without phase shift, FIG. 9 is a schematic diagram of the fusion process of the sampling data with phase shift, and FIG. 10 is a comparison diagram of the echo signal after the fusion of the sampling data without phase shift and the target echo signal after the fusion of the sampling data with phase shift. As shown in FIG. 8, after the fusion of the level state signals after the phase shift by the phase shift unit provided in the embodiment of the present application, the pulse width sampling data, the rising edge sampling data and the falling edge sampling data of the target echo signal are obviously increased, and therefore, the target echo signal after the fusion can have a larger dynamic range, thereby effectively improving the measurement accuracy of the LIDAR system.

The measurement unit 34 can perform target identification and distance calculation according to the target echo signal.

It should be noted that the process of target identification and distance calculation according to the target echo signal can refer to the existing identification and calculation methods, and the present application will not be repeated here.

It should be further noted that the above is only an exemplary description of the structure of the echo signal receiving device provided in the embodiment of the present application, and the echo signal receiving device can further include other modules/units, such as a storage unit, for storing echo data, etc.

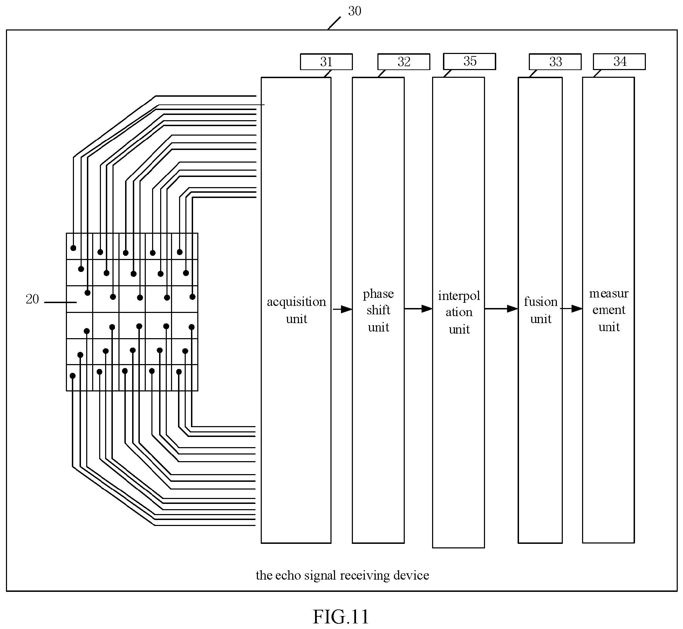

In order to further increase the dynamic range of the echo signal in the time domain, as shown in FIG. 11, the echo signal receiving device 30 can further include an interpolation unit 35.

The interpolation unit 35 is used for interpolating the level state signals output by the photosensitive subunits.

In a specific application, the interpolation unit 35 can set the interpolation multiple according to the sampling accuracy requirement, and can use a linear interpolation method, a spline interpolation method or a polynomial interpolation method for interpolation, and the present application does not impose a specific limitation in this regard.

It should be noted that the interpolation methods used by different photosensitive subunits can be the same or different, and the present application does not impose a specific limitation in this regard.

It should be understood that for the phase shift manner of phase shifting the sampling time as shown in FIG. 4 and FIG. 5, the level state signals after the phase shift can be interpolated, and for the phase shift manner of phase shifting by the data shifter as shown in FIG. 6, the level state signals can be interpolated before the phase shift or after the phase shift.

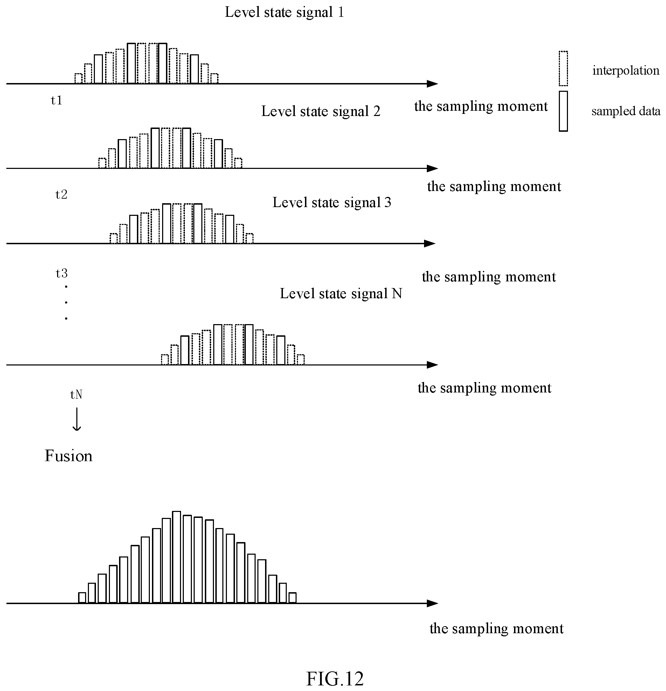

For example, referring to FIG. 12, which is a schematic diagram of a process in which the interpolation unit interpolates the level state signals output by the photosensitive subunits. As shown in FIG. 12, the interpolation unit 35 can interpolate each of the level state signals output by the photosensitive subunits, that is, for the level state signal output by the photosensitive subunit 1, after the phase shift time t1, interpolation is performed to obtain the phase-shifted and interpolated level state signal 1, for the level state signal output by the photosensitive subunit 2, after the phase shift time t2, interpolation is performed to obtain the phase-shifted and interpolated level state signal 2, and so on, for the level state signal output by the photosensitive subunit N, after the phase shift time tN, interpolation is performed to obtain the phase-shifted and interpolated level state signal N.

The fusion unit 33 is configured to fuse the phase-shifted and interpolated level state signals to obtain the target echo signal.

It should be noted that the LIDAR system can interpolate the level state signals output by only part of the photosensitive subunits according to the precision requirement, and the target echo signal obtained by fusing the phase-shifted and interpolated level state signals has more pulse width samples, rising edge samples and falling edge samples, which can further improve the dynamic range of the echo signal in the time domain, and further improve the measurement precision of the LIDAR system.

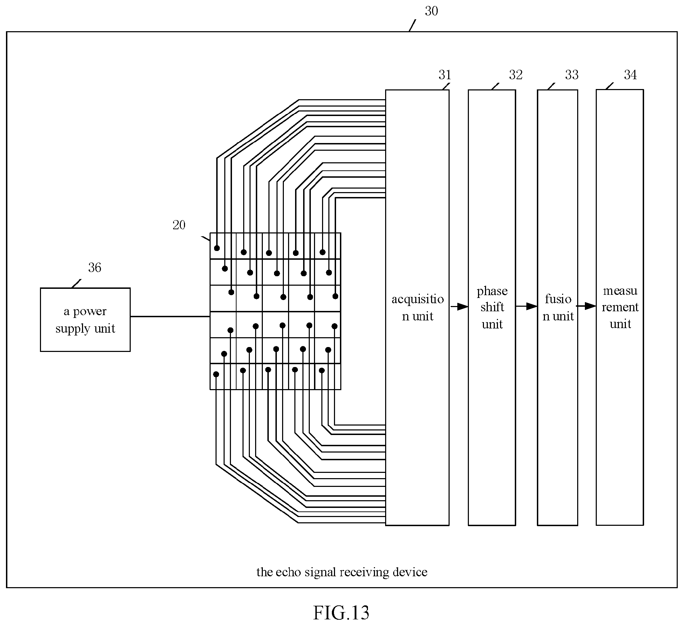

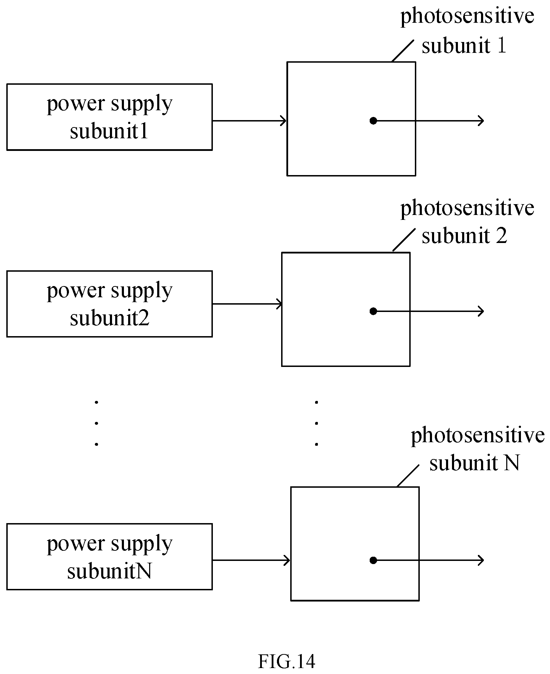

Referring to FIG. 13, which is a schematic diagram of a structure of an echo signal receiving device according to another embodiment of the present application. As shown in FIG. 13, the photosensitive receiving array can be powered by a power supply unit 36. As shown in FIG. 14, the power supply unit 36 can include a plurality of power supply subunits, each of which can correspond to one or more photosensitive subunits, and the power supply subunit corresponding to a photosensitive subunit provides working power for the photosensitive subunit, and at least two power supply subunits output different power supply voltages and/or different power supply currents.

The power supply voltages and/or the power supply currents output by the power supply subunits are different, so that the photosensitive subunits have different photon detection efficiencies (PDEs).

It can be understood that the photosensitive subunit working at a high PDE can detect objects at a farther distance, and the photosensitive subunit working at a low PDE can reduce echo saturation of objects at a short distance or with a high reflectivity. After the high-PDE photosensitive subunit and the low-PDE photosensitive subunit are independently sampled by the sampling unit, the sampled data (i.e., the level state signals) are phase-shifted or phase-shifted and interpolated, and the level state signals of all the photosensitive subunits are fused to form the target echo signal, so that the influence of excessive saturation or weak signals on measurement can be reduced when different detection distances and different reflectivity objects are dealt with.

The PDE of the two or more photosensitive subunits are different; the more the PDE of the photosensitive subunits are different, the more the number of different electron supply units is required, the more the measurement precision is improved, and the more the resource consumption is caused. Therefore, the number of photosensitive subunits with different PDEs can be set according to the actual measurement precision requirement.

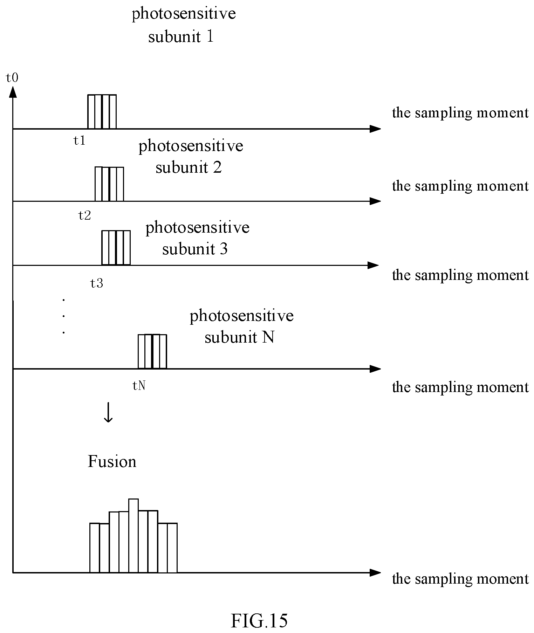

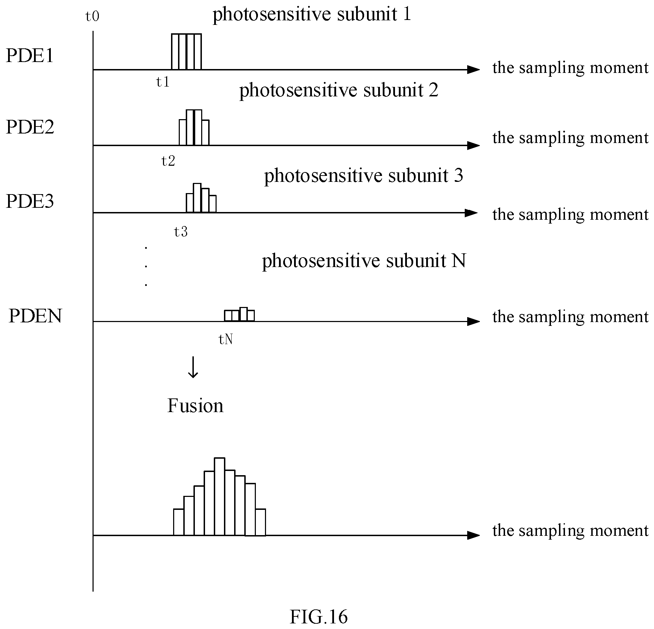

Please refer to FIG. 15 and FIG. 16, FIG. 15 is a schematic diagram of echo signals reflected by a high reflectivity object or a close object received by a receiving module with constant PDE, and FIG. 16 is a schematic diagram of echo signals reflected by a high reflectivity object or a close object received by an echo signal receiving device provided by the embodiment of the application, wherein PDE1 > PDE2 > PDE3 > PDEN. As can be seen from FIG. 15, when a high reflectivity object or a close object is detected, the level state signals of each photosensitive subunit are saturated, the waveform result after merging is over-saturated, and the sampling point number of the rising edge and the sampling point number of the falling edge are less. As can be seen from FIG. 16, in the echo signal receiving device with non-constant PDE, the sampling data of the photosensitive subunit with lower PDE is not saturated, and the sampling point number of the rising edge and the sampling point number of the falling edge of the echo signal after merging are higher. Thus, it can be seen that by setting the working voltage value and/or the working current value output by the different electron supply units, the sampling point number of the rising edge and the sampling point number of the falling edge of the echo signal can be effectively increased, so as to expand the dynamic range of the echo signal and further improve the measurement precision of the LIDAR system.

It should be noted that when a far distance object or a low reflectivity object is detected, for the receiving module with constant PDE, the level state signals of each photosensitive subunit are too small, and the echo signal after merging is also too small, so that the measurement precision is poor. In the echo signal receiving device with non-constant PDE, the photosensitive subunit with higher PDE outputs a level state signal with higher amplitude, so that the echo signal after merging has a larger amplitude, thereby improving the measurement precision.

The echo signal receiving device provided by the embodiment of the application is introduced above, and the echo signal receiving method provided by the embodiment of the application is introduced below. It can be understood that the echo signal receiving method provided by the embodiment of the application can be implemented based on the echo signal receiving device or based on the processing chip of the LIDAR system, and the application does not impose a specific limitation thereon. The echo signal receiving method provided by the embodiment of the application is described in detail below.

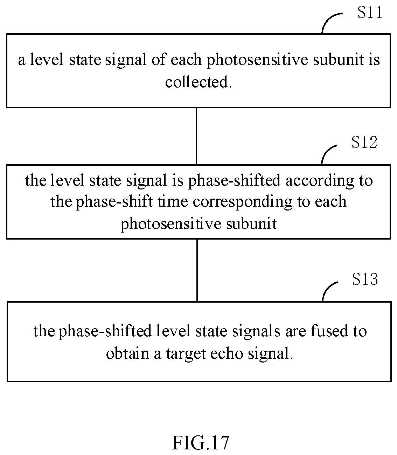

Please refer to FIG. 17, which shows an implementation process of an echo signal receiving method provided by the embodiment of the application. As shown in FIG. 3, the echo signal receiving method can specifically include S11-S13.

In S11, a level state signal of each photosensitive subunit is collected.

In a specific application, the receiving module of the LIDAR system can include a photosensitive receiving array, the photosensitive receiving array including a plurality of photosensitive subunits, and the echo light beam reflected by an object can form a corresponding level state signal after being received by the photosensitive subunits in the photosensitive receiving array, and the echo signal corresponding to the echo light beam can be obtained by collecting the level state signals of the photosensitive subunits.

In S12, the level state signal is phase-shifted according to the phase-shift time corresponding to each photosensitive subunit.

The phase-shift times corresponding to at least two photosensitive subunits are different.

In a specific application, in order to improve the dynamic range of the echo signal in the time domain, the level state signal output by the photosensitive subunit can be phase-shifted, so that the sampling number of the echo signal is increased, the phase-shifting of the level state signal can be a phase-shifting mode in which a delay time is set on the sampling time, so that the photosensitive subunit outputs the level state signal after the delay time corresponding to the photosensitive subunit, or a phase-shifting mode in which the level state signals output by a plurality of photosensitive subunits collected at the same sampling moment are input into a corresponding data shifter for sampling moment shifting.

In an embodiment of the present application, S12 can include the following steps:
a delay time of a sampling moment of the photosensitive subunit is determined according to the phase-shift time;
after the delay time, the photosensitive subunit is triggered to output the level state signal.
In a specific application, the delay time corresponding to each photosensitive subunit can be generated based on the delay architecture shown in FIG. 4 or FIG. 5, so that the flip-flop outputs the corresponding level state signal after the delay of each delay unit.

In another embodiment of the present application, S12 can also include the following steps:
the level state signal is input into a data shifter corresponding to the phase-shift time for sampling moment shifting;

In a specific application, the shift distance of the data shifter corresponds to the phase-shift time, and the acquisition unit can input the level state signal output by each photosensitive subunit into the data shifter corresponding to the phase-shift time, so as to realize the phase-shifting.

It can be understood that the level state signal output by only part of the photosensitive subunits can be phase-shifted, or the level state signal output by all the photosensitive subunits can be phase-shifted, as long as the phase-shift times of at least two photosensitive subunits are different.

In S13, the phase-shifted level state signals are fused to obtain a target echo signal.

In a specific application, fusing the phase-shifted level state signals can superimpose the level state signals at the same moment to obtain the target echo signal.

The LIDAR system can perform target recognition and distance calculation according to the target echo signal.

It should be noted that the process of target recognition and distance calculation according to the target echo signal can refer to the existing recognition and calculation methods, and the present application does not repeat the description.

In some embodiments, the photosensitive receiving array has at least two photosensitive subunits with different photon detection efficiencies.

In a specific application, the photosensitive receiving array can be powered by a power supply unit. The power supply unit can include a plurality of power supply subunits, each of which can correspond to a photosensitive subunit, and the power supply subunit corresponding to the photosensitive subunit provides working power for the photosensitive subunit. At least two power supply subunits output different power supply voltages and/or power supply currents, so that the photosensitive receiving array has at least two photosensitive subunits with different photon detection efficiencies.

As can be seen, the echo signal receiving method provided by the embodiment of the present application shifts the level state signals output by the photosensitive subunits, and at least two unequal phase shift times are present, thereby improving the dynamic range of the sampling number, and the target echo signal obtained by fusing the phase-shifted level state signals can have a larger dynamic range in the time domain, thereby improving the measurement accuracy of the LIDAR.

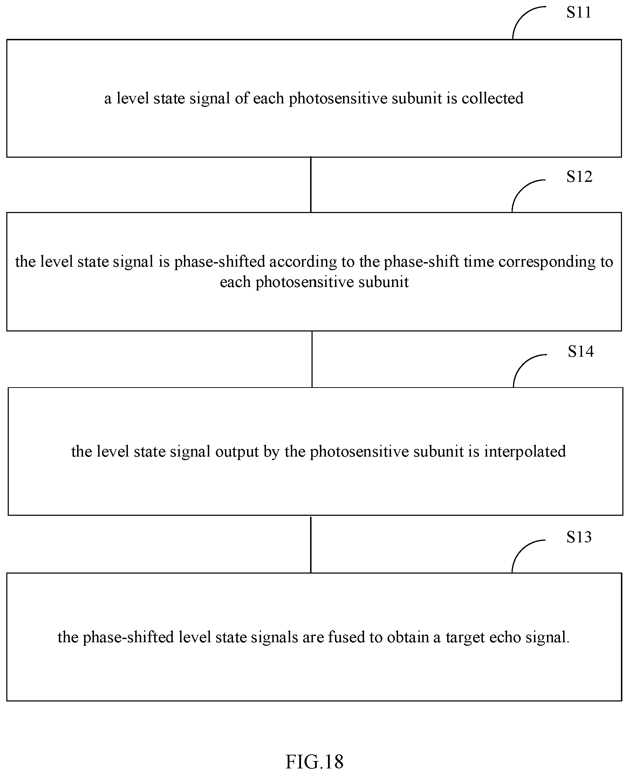

Referring to FIG. 18, FIG. 18 shows an implementation process of an echo signal receiving method provided by another embodiment of the present application. As shown in FIG. 18, in some embodiments, the echo signal receiving method can further include the following steps:
In S14, the level state signal output by the photosensitive subunit is interpolated.

In a specific application, the interpolation multiple can be set according to the sampling accuracy requirement, the interpolation unit can use a linear interpolation method to perform interpolation, can use a spline interpolation method to perform interpolation, and can use a polynomial interpolation method to perform interpolation, and the present application does not impose a specific limitation.

It should be noted that the interpolation methods used by different photosensitive subunits can be the same or different, and the present application does not impose a specific limitation.

In a specific application, the phase shift manner for phase shifting the sampling time can interpolate the phase-shifted level state signal, and the phase shift manner for phase shifting the data shifter can interpolate the level state signal before phase shifting or interpolate the level state after phase shifting.

The LIDAR system can interpolate the level state signals output by the part of the photosensitive subunits according to the accuracy requirement, merge the phase-shifted interpolated level state signals, and obtain the target echo signal with more pulse width sampling numbers, rising edge sampling numbers and falling edge sampling numbers, so as to further improve the dynamic range of the echo signal in the time domain and the measurement accuracy of the LIDAR system.

It should be understood that the sequence numbers of the steps in the above embodiments do not mean the execution sequence, and the execution sequence of each process should be determined according to its function and inherent logic, and should not constitute any limitation on the implementation process of the embodiments of the present application.

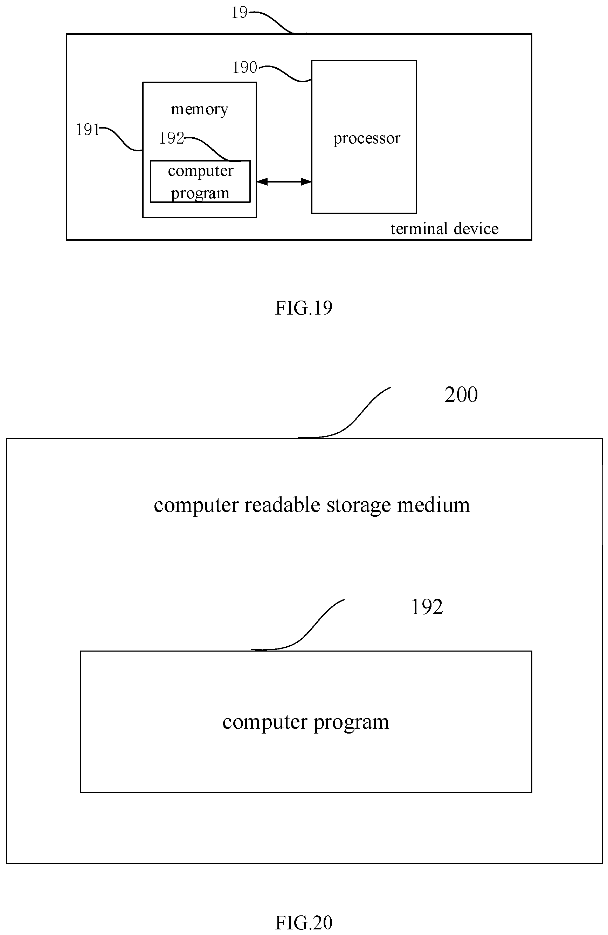

FIG. 19 is a schematic diagram of a structure of a terminal device according to another embodiment of the present application. As shown in FIG. 19, the terminal device 19 according to the embodiment includes a processor 190, a memory 191, and a computer program 192, for example, an image segmentation program, stored in the memory 191 and executable in the processor 190. The processor 190 implements the steps in each of the echo signal receiving method embodiments, for example, S11-S13 shown in FIG. 17, when executing the computer program 192.

For example, the computer program 192 can be divided into an obtaining unit, a determining unit, and a calculating unit. The specific functions of the units can be referred to the related description in the corresponding embodiments of FIG. 3, and details are not described herein.

The terminal device can include but is not limited to the processor 190 and the memory 191. Those skilled in the art can understand that FIG. 19 is merely an example of the terminal device 19, and does not constitute a limitation on the terminal device 19, and can include more or less components than those shown, or combine some components, or different components, for example, the terminal device can also include an input/output device, a network access device, a bus, and the like.

The processor 190 can be a central processing unit (CPU), and can also be other general-purpose processors, a digital signal processor (DSP), an application specific integrated circuit (ASIC), a field-programmable gate array (FPGA) or other programmable logic device, discrete gate or transistor logic device, discrete hardware component, or the like. The general-purpose processor can be a microprocessor, or the processor can also be any conventional processor, or the like.

The memory 191 can be an internal storage unit of the terminal device 19, for example, a hard disk or a memory of the terminal device 19. The memory 191 can also be an external storage device of the terminal device 19, for example, a plug-in hard disk, a smart media card (SMC), a secure digital (SD) card, a flash card, or the like, which is equipped on the terminal device 19. Further, the memory 191 can include both the internal storage unit and the external storage device of the terminal device 19. The memory 191 is used for storing the computer program and other programs and data required by the terminal device. The memory 191 can also be used for temporarily storing data that has been output or is to be output.

The embodiment of the application further provides a computer readable storage medium. Referring to FIG. 20, FIG. 20 is a structural schematic diagram of a computer readable storage medium provided by the embodiment of the application. As shown in FIG. 20, the computer readable storage medium 200 stores a computer program 192. When the computer program 192 is executed by a processor, the echo signal receiving method can be implemented.

The embodiment of the application further provides a computer program product. When the computer program product is run on a terminal device, the terminal device is enabled to implement the echo signal receiving method.

Those skilled in the art can clearly understand that, for the convenience and brevity of description, only the division of the above functional units and modules is exemplified, and in actual application, the above functions can be distributed to be completed by different functional units and modules according to needs, that is, the internal structure of the terminal device is divided into different functional units or modules to complete all or part of the functions described above. Each functional unit and module in the embodiments can be integrated in one processing unit, or each unit can be physically present separately, or two or more units can be integrated in one unit. The integrated unit can be implemented in the form of hardware or in the form of a software functional unit. In addition, the specific names of the functional units and modules are only for the convenience of mutual distinction, and are not used to limit the protection scope of the application. The specific working processes of the units and modules in the system can refer to the corresponding processes in the foregoing method embodiments, and will not be described herein.

In the above embodiments, the description of each embodiment has its own focus, and the parts not detailed or described in a certain embodiment can be referred to the related description of other embodiments.

Those of ordinary skill in the art can be aware that, in combination with the embodiments disclosed herein, units and algorithm steps of each example can be implemented by electronic hardware, or a combination of computer software and electronic hardware. Whether the functions are performed by hardware or software depends on particular applications and design constraints of the technical solutions. Professionals can use different methods to implement the described functions, but it should not be considered that such implementation goes beyond the scope of the present application.

The above embodiments are only used to illustrate the technical solutions of the present application, but not to limit them; although the present application is described in detail with reference to the foregoing embodiments, those of ordinary skill in the art should understand that the technical solutions recorded in the foregoing embodiments can still be modified, or some technical features can be replaced by equivalents; and these modifications or replacements do not make the essence of the corresponding technical solutions deviate from the spirit and scope of the technical solutions of the embodiments of the present application, and should be included in the protection scope of the present application.

## Claims

1. An echo signal receiving method, applied to a LIDAR system, wherein the LIDAR system comprises a photosensitive receiving array, and the photosensitive receiving array comprises a plurality of photosensitive subunits, and the method comprises:
collecting a level state signal of each photosensitive subunit;
phase-shifting the level state signal according to a phase shift time corresponding to each photosensitive subunit, wherein the phase shift times corresponding to at least two photosensitive subunits are different; and
fusing the phase-shifted level state signal to obtain a target echo signal.

2. The echo signal receiving method according to claim 1, wherein said phase-shifting the level state signal according to the phase shift time corresponding to each photosensitive subunit comprises:
determining a delay time for a sampling moment of the photosensitive subunit according to the phase shift time; and
after the delay time has elapsed, triggering the photosensitive subunit to output the level state signal.

3. The echo signal receiving method according to claim 2, wherein said phase-shifting the level state signal according to the phase shift time corresponding to each photosensitive subunit comprises:
inputting the level state signal into a data shifter corresponding to the phase shift time to shift the sampling moment.

4. The echo signal receiving method according to claim 3, further comprising, after collecting the level state signal of each photosensitive subunit:
interpolating the level state signal output by the photosensitive subunit.

5. The echo signal receiving method according to claim 3, wherein the photosensitive receiving array comprises at least two photosensitive subunits with different photon detection efficiencies.

6. An echo signal receiving device, comprising:
a photosensitive receiving array comprising a plurality of photosensitive subunits;
an acquisition unit, connected with the photosensitive receiving array, and configured to collect a level state signal output by the photosensitive receiving array;
a phase-shifting unit, connected with an acquisition unit, and configured to phase-shift the level state signal according to a phase shift time corresponding to each photosensitive subunit, wherein the phase shift times corresponding to at least two photosensitive subunits are different; and
a fusion unit, connected with the phase-shifting unit, and configured to fuse the phase-shifted level state signal to obtain a target echo signal.

7. The echo signal receiving device according to claim 6, wherein the phase-shifting unit comprises a clock generator and a delay unit,
the clock generator is configured to generate a sampling moment;
the delay unit is configured to delay a collecting moment for an acquisition unit.

8. The echo signal receiving device according to claim 7, wherein the delay unit comprises a serial delay unit or a parallel delay unit.

9. The echo signal receiving device according to claim 6, wherein the phase shifting unit comprises a data shifter,
the data shifter is configured to shift sampling moments of the level state signals.

10. The echo signal receiving device according to any one of claims 6 to 9, further comprising:
an interpolation unit configured to interpolate the level state signals output by the photosensitive subunits.

11. The echo signal receiving device according to claim 10, further comprising:
a power supply unit comprising at least two power supply subunits with different power supply voltages and/or power supply currents, the power supply subunits being configured to supply power to corresponding photosensitive subunits.

12. A terminal device, comprising a memory, a processor, and a computer program stored in the memory and executable on the processor, wherein the processor implements the echo signal receiving method according to any one of claims 1 to 5 when executing readable instructions of the computer program.

13. A computer readable storage medium storing a computer program, wherein readable instructions of the computer program, when executed by a processor, cause the processor to implement the echo signal receiving method according to any one of claims 1 to 5.
